# EUROPÄISCHE PATENTSCHRIFT

(11) **EP 1 038 617 B1**
(45) Veröffentlichungstag und Bekanntmachung des Hinweises auf die Patenterteilung: **02.02.2011**
(21) Anmeldenummer: 00110096.5
(22) Anmeldetag: 07.12.1996
(51) Int. Cl.: B23B 29/20

(54) **Werkzeughalter und Werkzeugmaschine**
Toolholder and machine tool
Porte-outil et machine-outil

(30) Priorität: 22.12.1995 DE 19548151
(43) Veröffentlichungstag der Anmeldung: 27.09.2000
(62) Teilanmeldung aus: 96119655.7
(73) Patentinhaber: Index-Werke GmbH & Co. KG Hahn & Tessky, 73730 Esslingen (DE)
(72) Erfinder: Grossmann, Walter, 73666 Baltmannsweiler (DE)
(74) Vertreter: Hoeger, Stellrecht & Partner Patentanwälte

(56) Entgegenhaltungen:
- CH-A- 503 550
- DE-A- 3 330 653
- US-A- 922 429
- US-A- 3 490 318
- US-A- 4 611 383

## Beschreibung

Die Erfindung betrifft einen Werkzeughalter für Werkzeugmaschinen umfassend einen das Werkzeug tragenden Werkzeughalterkörper, welcher eine Anlagefläche aufweist und einen von dieser abstehenden Schaft zum Spannen des Werkzeughalters in einer Werkzeugstation eines Werkzeugträgers trägt, und ein Ausrichtelement einer zwischen Werkzeughalterkörper und Werkzeugträger wirksamen Ausrichteinrichtung zur Positionierung des Werkzeughalterkörpers relativ zum Werkzeugträger.

Außerdem betrifft die Erfindung eine Werkzeugmaschine, umfassend einen Werkzeugträger mit einer Werkzeugstation, welche eine Auflagefläche für eine Anlagefläche eines Werkzeughalters und eine Aufnahme für einen Schaft des Werkzeughalters aufweist, wobei die Anlagefläche dann gegen die Auflagefläche anliegt, wenn der Werkzeughalter mit seinem Schaft in der Aufnahme eingespannt ist, und ein Ausrichtelement einer zwischen Werkzeughalterkörper und Werkzeugträger wirksamen Ausrichteinrichtung zur Positionierung des Werkzeughalterkörpers relativ zum Werkzeugträger.

Ein derartiger Werkzeughalter und eine derartige Werkzeugmaschine sind aus der DE 39 29 802 C1 bekannt.

Bei diesem Werkzeughalter und der entsprechenden Werkzeugmaschine erfolgt eine Verbindung zwischen dem Werkzeughalter und der Werkzeugmaschine mittels des Schaftes.

Bei dieser bekannten Lösung sind an dem Werkzeughalterkörper notwendigerweise zwei Vorsprünge angeordnet, welche jeweils noch eine Schraube als Justierelement tragen, wobei der Werkzeughalterkörper relativ zum Werkzeugträger durch die beiden gegenüberliegende Stirnflächen des Werkzeugträgers beaufschlagenden Justierelemente ausrichtbar ist.

Die Werkzeugmaschine weist hingegen an dem den Werkzeughalter tragenden, als Revolver ausgebildeten Werkzeugträger keine besonderen Merkmale auf.

Diese Lösung hat den Nachteil, dass jeder Werkzeughalterkörper bei jedem Einsetzen in die Werkzeugstation mittels der Justiereinrichtungen in der eingesetzten Stellung justiert werden muss, da sich bei mehrfachem Herausnehmen und Einsetzen des Werkzeughalters Veränderungen der von den Justiereinrichtungen beaufschlagten Oberflächen des Werkzeugträgers relativ zur Aufnahme und somit Ungenauigkeiten ergeben.

Aus der CH-A-503 550 erfolgt eine Ausrichtung zwischen dem Werkzeughalterkörper und der Werkzeugmaschine mittels Zapfen und Schrauben, die Schrauben sind jedoch im Werkzeughalterkörper vorgesehen, und sind jeweils nach dem Aufsetzen des Werkzeughalters einzustellen.

Aus der US-A-922429 ist ein eine Fixierung eines Schaftes eines Werkzeughalters durch Einklemmen desselben offenbart, wobei der Werkzeughalterkörper keine Anlagefläche aufweist, mit welcher dieser an einer Auflagefläche des Werkzeugträgers anlegbar ist.

Der Erfindung liegt daher die Aufgabe zugrunde, einen Werkzeughalter und auch eine derartige Werkzeughalter aufnehmende Werkzeugmaschine der gattungsgemäßen Art derart zu verbessern, dass die Werkzeughalter in der jeweiligen Werkzeugstation des Werkzeugträgers nicht bei jedem Einsetzen jeweils neu justiert werden müssen.

Diese Aufgabe wird bei einem Werkzeughalter der eingangs beschriebenen Art erfindungsgemäß dadurch gelöst, dass das Ausrichtelement einen Ausrichtelementkörper aufweist, welcher auf einer Stirnfläche des Werkzeughalterkörpers justierbar angeordnet ist und dass das Ausrichtelement ein Formschlusselement umfasst, welches bei in der Aufnahme eingespanntem Schaft und an einer Auflagefläche des Werkzeugträgers anliegender Anlagefläche spielfrei in ein Formschlusselement des Werkzeugträgers eingreift, um den Werkzeughalterkörper relativ zum Werkzeugträger in einer einzigen Stellung ausgerichtet zu fixieren.

Alternativ oder ergänzend dazu wird die Aufgabe bei einem Werkzeughalter der eingangs beschriebenen Art erfindungsgemäß dadurch gelöst, dass das Ausrichtelement einen Ausrichtelementkörper aufweist, der sich ausgehend vom Werkzeughalterkörper über dessen Anlagefläche hinaus erstreckt und ein Formschlusselement trägt, welches bei gegen die Auflagefläche anliegender Anlagefläche auf einer dem Werkzeughalter abgewandten Seite der durch die Auflagefläche definierten Ebene liegt und dabei mit einem Ausrichtelement des Werkzeugträgers spielfrei in Eingriff steht, um den Werkzeughalterkörper relativ zum Werkzeugträger in einer einzigen Stellung ausgerichtet fixieren.

Der Vorteil der erfindungsgemäßen Lösung ist darin zu sehen, dass die vom Werkzeugträger getrennten Formschlusselemente die Möglichkeit eröffnen, diese in eigens für diese konzipierten Herstellungsschritten einerseits mit der entsprechenden Verschleißfestigkeit und andererseits mit der gewünschten Präzision herzustellen und somit die Möglichkeit zu schaffen, bei einmal justiert relativ zu Werkzeugträger und Werkzeughalterkörper angeordneten Formschlusselementen ausschließlich durch Herstellen des Formschlusses zwischen den Formschlusselementen dieselbe Ausrichtung des Werkzeughalterkörpers zum Werkzeugträger wiederholt zu reproduzieren.

Weitere vorteilhafte Ausführungsformen sind Gegenstand der Ansprüche 3 bis 16.

Darüber hinaus wird die Aufgabe bei einer Werkzeugmaschine der eingangs genannten Art erfindungsgemäß dadurch gelöst, dass das Ausrichtelement einen Ausrichtelementkörper aufweist, welcher auf einer Stirnfläche des Werkzeughalterkörpers justierbar angeordnet ist, und dass das Ausrichtelement ein Formschlusselement umfasst, welches bei in der Aufnahme eingespannte Schaft und an einer Auflagefläche des Werkzeugträgers anliegender Anlagefläche spielfrei in ein Formschlusselement am Werkzeughalter eingreift, um den Werkzeughalterkörper relativ zum Werkzeugträger in einer einzigen Stellung ausgerichtet zu fixieren.

Alternativ oder ergänzend dazu wird die Aufgabe bei einer Werkzeugmaschine der eingangs genannten Art erfindungsgemäß dadurch gelöst, dass das Ausrichtelement am Werkzeugträger auf einer dem Werkzeughalter abgewandten Seite der durch die Auflagefläche definierten Ebene liegt, und dass das Ausrichtelement spielfrei mit dem Ausrichtelement des Werkzeughalters in Eingriff bringbar ist, um den Werkzeughalterkörper relativ zum Werkzeugträger in einer einzigen Stellung ausgerichtet zu fixieren.

Der Vorteil dieser Lösung ist der, dass bei einer derartigen Werkzeugmaschine ebenfalls eine exakte und reproduzierbare Justierung der Werkzeughalter erreichbar ist.

Weitere vorteilhafte Lösungen sind Gegenstand der Ansprüche 19 bis 23.

Mit den erfindungsgemäßen Lösungen lässt sich insbesondere eine Werkzeugfixiereinrichtung für Werkzeugmaschinen, umfassend einen Werkzeughalter mit einem das Werkzeug tragenden Werkzeughalterkörper, welcher eine Anlagefläche und einen von dieser abstehenden Schaft zum Spannen des Werkzeughalters aufweist, einen Werkzeugträger mit einer Werkzeugstation, umfassend eine Auflagefläche und eine Aufnahme für den Schaft, wobei die Anlagefläche dann gegen die Auflagefläche anliegt, wenn der Werkzeughalter mit seinem Schaft in der Aufnahme eingespannt ist, und eine zwischen Werkzeughalterkörper und Werkzeugträger wirksame Ausrichteinrichtung zur Positionierung des Werkzeughalterkörpers relativ zum Werkzeugträger, insbesondere hinsichtlich einer Verdrehung um eine Längsachse des Schaftes, schaffen, bei welcher die Ausrichteinrichtung ein erstes und ein zweites Ausrichtelement umfaßt, von denen das erste am Werkzeugträger und das zweite am Werkzeughalterkörper angeordnet ist, und die Ausrichtelemente bei in der Aufnahme eingespanntem Schaft mittels spielfrei ineinander greifenden Formschlußelementen den Werkzeughalterkörper relativ zum Werkzeugträger, insbesondere hinsichtlich der Verdrehung um die Längsachse des Schaftes in einer einzigen Stellung ausgerichtet, fixieren.

Besonders vorteilhaft ist es, wenn die Formschlußelemente durch eine Bewegung in Einsteckrichtung des Werkzeughalters in der Werkzeugstation in Eingriff bringbar sind, da dann die Möglichkeit besteht, gleichzeitig mit dem Einsetzen des Werkzeughalters den Eingriff zwischen den Formschlußelementen herzustellen.

Eine besonders vorteilhafte Lösung der Erfindung sieht vor, daß eines der Formschlußelemente eine Aufnahme mit einander zugewandten Fixierflanken und das andere der Formschlußelemente einen Einsatz für die Aufnahme mit in entgegengesetzte Richtungen weisenden Außenflanken aufweist, wobei der Einsatz mit seinen Außenflanken so in die Aufnahme einsetzbar ist, daß die Außenflanken an den Fixierflanken anliegen.

Die Fixierflanken können prinzipiell parallel zueinander verlaufen. Besonders günstig ist es jedoch, wenn die Fixierflanken quer zu der Einsteckrichtung einen Abstand aufweisen, welcher mit zunehmender Erstreckung der Fixierflanken in Einsteckrichtung geringer wird, so daß die Möglichkeit besteht, beim Einstecken des Werkzeughalters den Einsatz mit seinen Außenflanken in die Aufnahme mit den Fixierflanken einzuführen und die Außenflanken an den Fixierflanken zur Anlage zu bringen.

Die Außenflanken und die Fixierflanken können prinzipiell so relativ zueinander verlaufen, daß bei zwischen den Fixierflanken eingestecktem Einsatz die Außenflanken und die Fixierflanken punktförmig aneinander anliegen. Vorteilhaft ist es aber, insbesondere um möglichst große Kräfte durch die formschlüssig ineinandergreifenden Formschlußelemente übertragen zu können, wenn die Fixierflanken und die Außenflanken aneinander angepaßt sind und zumindest in einer Richtung linienförmig aneinander anliegen.

Besonders vorteilhaft ist es dabei, wenn die Außenflanken oder die Fixierflanken konvex und die jeweils anderen Flanken einen geringeren Krümmungsradius aufweisen, vorzugsweise flach, d. h. gerade ausgebildet sind, so daß selbst bei nicht ganz idealer Anpassung der Form der Fixierflanken an die Form der Außenflanken eine Anlage der beiden aneinander mit einem möglichst großen Anschmiegeradius gegeben ist.

Da jedoch bei der Drehbearbeitung vielfach große Momente und damit große Kräfte auf die Formschlußelemente auftreten, ist es besonders vorteilhaft, wenn die Formschlußelemente beim formschlüssigen Ineinandergreifen im wesentlichen flächig aneinander anliegen.

Eine derartige flächige Anlage läßt sich besonders zweckmäßig dann realisieren, wenn Formschlußelemente mit Paßflächen aneinander anliegen.

Eine aufgrund ihrer Einfachheit besonders kostengünstige Lösung sieht dabei vor, daß die Formschlußelemente jeweils einstückig an das jeweilige Ausrichtelement angeformt sind.

Hinsichtlich der Art der Anordnung der ersten und zweiten Ausrichtelemente wurden bislang keine näheren Angaben gemacht.

Eine aufgrund ihrer Einfachheit besonders günstige Lösung sieht vor, daß mindestens eines der Ausrichtelemente, vorzugsweise beide, nach ihrer exakten Justierung fixierbar sind, beispielsweise mittels Schrauben. In einem derartigen Fall einer kraftschlüssigen Fixierung der Ausrichtelemente, besteht die Möglichkeit, daß im Fall einer Werkzeugkollision eine Verschiebung der Ausrichtelemente ohne Beschädigung derselben und der Maschine möglich ist, die durch Nachjustieren wiederum korrigierbar ist.

Ferner wäre es beispielsweise möglich, die Ausrichtelemente selbst in einer Justiereinrichtung aufzunehmen und somit die Ausrichtelemente selbst relativ zum Werkzeugträger oder zum Werkzeughalterkörper fixierbar anzuordnen.

Eine derartige Lösung wäre jedoch aufwendig und würde stets die Gefahr einer nachträglichen Dejustierung beinhalten.

Aus diesem Grund sieht ein besonders vorteilhaftes Ausführungsbeispiel vor, daß die Ausrichtelemente nach ihrer exakten Justierung relativ zum Werkzeugträger oder Werkzeughalterkörper unverschiebbar an diesen fixiert sind.

Eine Möglichkeit, die Ausrichtelemente unverschiebbar mit dem Werkzeugträger und dem Werkzeughalterkörper zu verbinden, wäre die, die Ausrichtelemente anzuschweißen. Dies ist jedoch aufwendig und erschwert eine spätere Demontage.

Aus diesem Grund sieht ein besonders vorteilhaftes Ausführungsbeispiel vor, daß die Ausrichtelemente über Formschlußverbindungen unverschiebbar mit dem Werkzeugträger oder dem Werkzeughalterkörper verbunden sind. Eine vorteilhafte derartige Formschlußverbindung ist durch nach Justierung der Ausrichtelemente angebrachte Stiftverbindungen realisierbar.

Die Ausrichtelemente könnten prinzipiell beliebig angeordnet sein.

So ist es besonders günstig, wenn das am Werkzeugträger angeordnete Ausrichtelement auf einer Außenfläche desselben sitzt und damit zur Montage und beispielsweise auch zur Justierung gut zugänglich ist.

Ferner ist es günstig, wenn das am Werkzeughalterkörper angeordente Ausrichtelement auf einer Außenfläche des Werkzeughalterkörpers sitzt um ebenfalls zur Montage und beispielsweise auch zur Justierung gut zugänglich zu sein.

Besonders vorteilhaft ist eine Lösung, bei welcher die das Ausrichtelement tragenden Außenfläche des Werkzeugträgers und die das Ausrichtelement tragende Außenfläche des Werkzeughalterkörpers miteinander fluchten.

Ein weiteres vorteilhaftes Ausführungsbeispiel sieht vor, daß das erste Ausrichtelement und das diesem zugeordnete Formschlußelement auf einer dem Werkzeughalter abgewandten Seite einer durch die Auflagefläche definierten Ebene liegen. Damit können in diese Werkzeugstation alle Arten von Werkzeughaltern eingesetzt werden, ohne daß eine Behinderung des Einsatzes durch das Ausrichtelement und das diesem zugeordnete Formschlußelement eintreten kann.

Ein besonders vorteilhaftes Ausführungsbeispiel einer erfindungsgemäßen Werkzeugfixiereinrichtung umfaßt einen Werkzeugträger mit einer Vielzahl von Werkzeugstationen, in welche Werkzeughalter einsetzbar sind, wobei mindestens zwei Werkzeugstationen jeweils mit einem ersten Ausrichtelement versehen sind, welches so justiert ist, daß ein in jede dieser Werkzeugstationen eingesetzter und mit einem zweiten Ausrichtelement versehener Werkzeughalter in seiner jeweiligen Arbeitsposition identisch ausgerichtet ist.

Der Vorteil der erfindungsgemäßen Lösung ist darin zu sehen, daß durch die Anordnung der beiden Ausrichtelemente sowohl am Werkzeugträger als auch an dem Werkzeughalterkörper die Möglichkeit besteht, diese beim Anordnen sowohl an dem Werkzeugträger als auch dem Werkzeughalterkörper zu justieren und dadurch über diese zwei Justiermöglichkeiten sämtliche Toleranzen auszugleichen, so daß dann beim Einsetzen eines derart vorbereiteten Werkzeughalters in eine der derart vorbereiteten Werkzeugstationen des Werkzeugträgers lediglich die Formschlußelemente noch formschlüssig und spielfrei ineinander zu greifen haben, um die bei der Montage der Fixierelemente bereits vorgegebene Ausrichtung des Werkzeughalters relativ zum Werkzeugträger zu erhalten.

Mit dieser Lösung ist somit die Möglichkeit geschaffen, bereits bei der Montage der Ausrichtelemente sowohl am Werkzeugträger als auch am Werkzeughalterkörper die relative Ausrichtung des Werkzeughalters zum Werkzeugträger festzulegen, so daß keinerlei nachträgliche Justierung nach Einsetzen jedes derart vorbereiteten Werkzeughalters in jede derart vorbereitete Werkzeugstation des Werkzeugträgers erforderlich ist.

Weitere Merkmale und Vorteile sind Gegenstand der nachfolgenden Beschreibung sowie der zeichnerischen Darstellung einiger Ausführungsbeispiele.

In der Zeichnung zeigen:
- Fig. 1: eine Draufsicht auf ein Ausschnitt einer Drehmaschine mit einer erfindungsgemäßen Werkzeugfixiereinrichtung;
- Fig. 2: eine Draufsicht auf den Revolver in Richtung des Pfeils A in Fig. 1;
- Fig. 3: eine vergrößerte Darstellung von Werkzeug- halter und Revolver in einem Bereich B in Fig. 1;
- Fig. 4: eine Draufsicht auf Werkzeughalter und Revol- ver in Richtung des Pfeils C in Fig. 3;

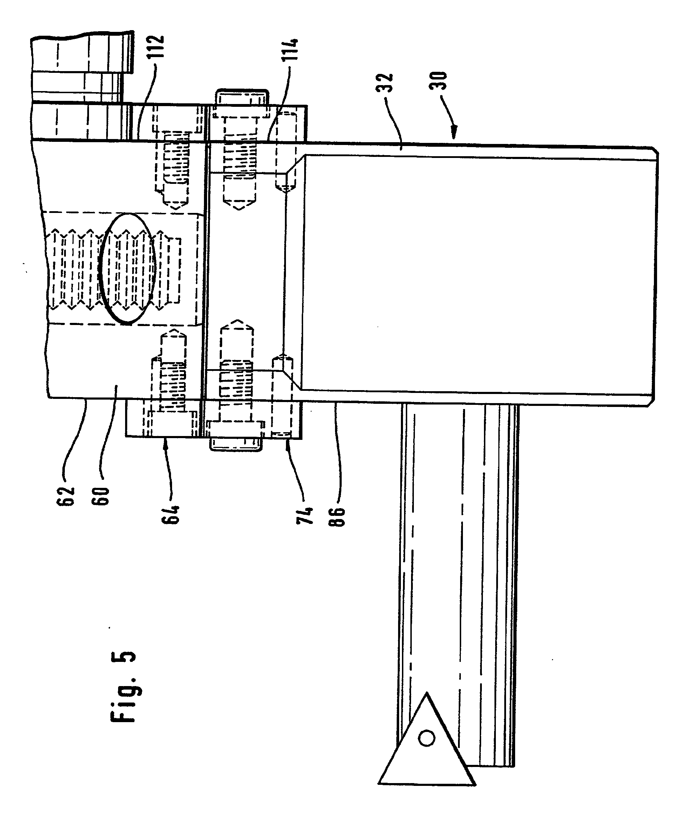

- Fig. 5: eine Darstellung eines zweiten Ausführungs- beispiels einer erfindungsgemäßen Werkzeug- fixiereinrichtung ähnlich Fig. 3;
- Fig. 6: eine Darstellung eines Ausschnitts einer Drehmaschine mit einem dritten Ausführungs- beispiel einer erfindungsgemäßen Werkzeug- fixiereinrichtung ähnlich Fig. 1;
- Fig. 7: eine Draufsicht auf den Revolver in Richtung des Pfeils D in Fig. 6 und
- Fig. 8: eine Draufsicht ähnlich Fig. 4 eines vierten Ausführungsbeispiels.

Ein Ausführungsbeispiel einer Drehmaschine mit einer erfindungsgemäßen Werkzeugfixiereinrichtung umfaßt eine an einem Maschinengestell 10 angeordnete Spindel 12 zur Aufnahme eines Werkstücks 14, wobei die Spindel 12 um eine Spindelachse 16 drehbar ist.

An dem Maschinengestell 10 ist ferner ein Werkzeugschlitten 18 beispielsweise in X- und Z-Richtung verschieblich gelagert, wobei der Werkzeugschlitten 18 einen als Ganzes mit 20 bezeichneten Revolver trägt, welcher um eine Revolverschaltachse 22, die in diesem Ausführungsbeispiel parallel zur Spindelachse 16 verläuft, drehbar ist.

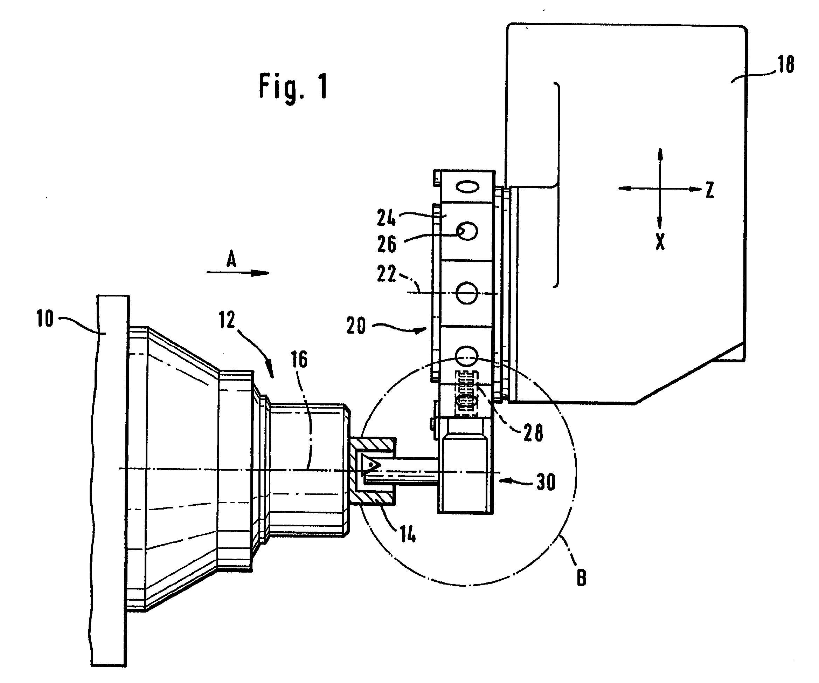

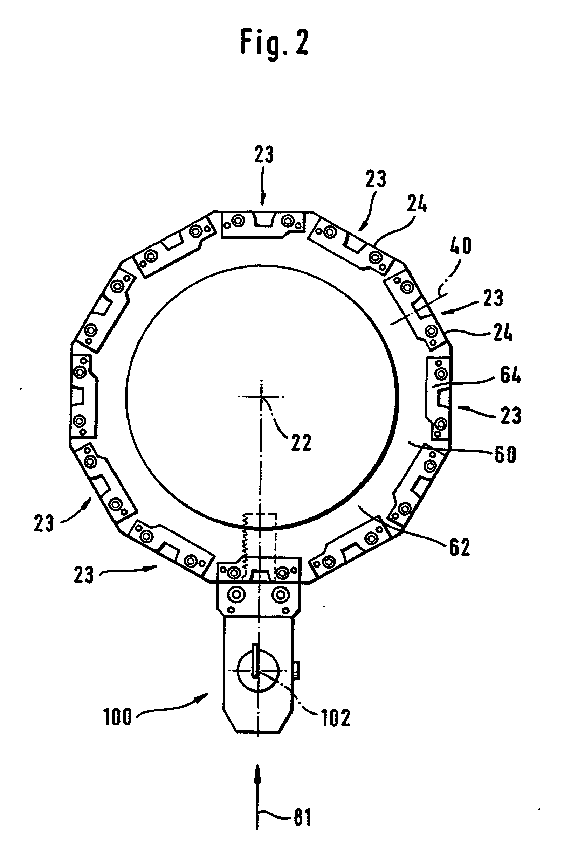

Der Revolver 20 weist, wie in Fig. 1 und 2 dargestellt, an seinem Außenmantel eine Vielzahl von Werkzeugstationen 23 auf, von denen jede eine als Planfläche ausgebildete Auflagefläche 24 umfaßt, die eine Aufnahme 26 für einen Schaft 28 eines Werkzeughalters 30 umgibt.

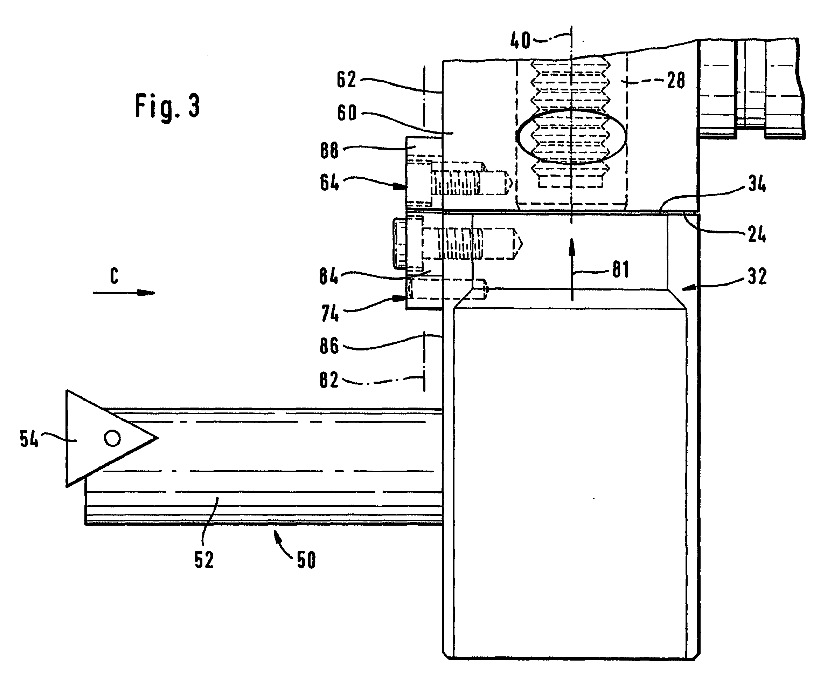

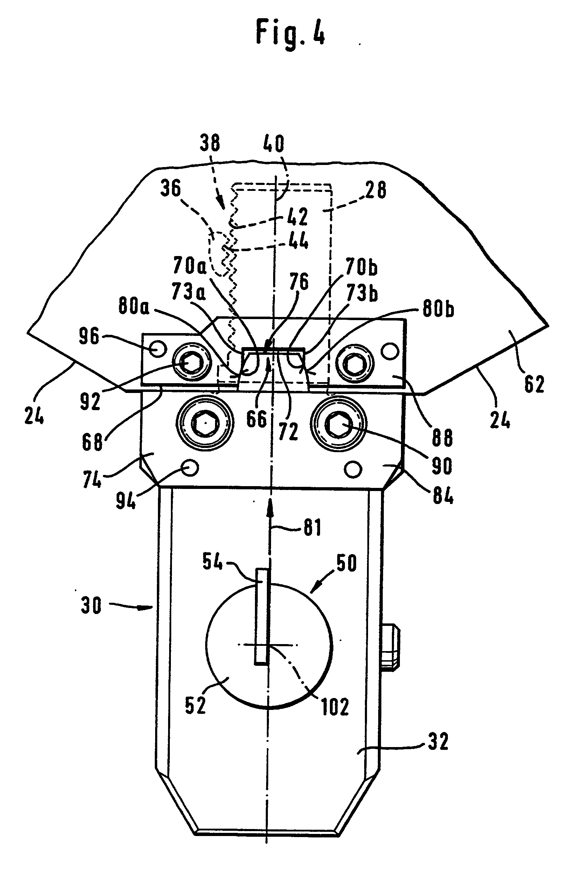

Wie in Fig. 3 und 4 dargestellt, umfaßt der Werkzeughalter 30 einen Werkzeughalterkörper 32 mit einer Anlagefläche 34, welche auf der Auflagefläche 24 des Revolvers 20 abstützbar ist. Ferner ist am Werkzeughalterkörper 32 der Schaft 28 gehalten, welcher bei auf der Auflagefläche 24 aufliegender Anlagefläche 34 in die Aufnahme 26 eingreift und dieser mittels eines Spannelements 36 einer Spanneinrichtung festspannbar ist.

Vorzugsweise ist der Schaft 28 als Zylinderschaft nach DIN 69880 ausgebildet und weist entweder auf einer Seite oder auf zwei gegenüberliegenden Seiten eine Abflachung 38 auf, welche mit einer quer zu einer in radialer Richtung zur Revolverschaltachse 22 verlaufenden Längsachse 40 des Schaftes verlaufenden Verzahnung 42 versehen ist, in welche das ebenfalls mit einer Verzahnung 44 versehene Spannelement 36 eingreift.

Das Spannelement 36 beaufschlagt dabei den Schaft 28 mit einer Kraft, welche die Anlagefläche 34 gegen die Auflagefläche 24 preßt.

An dem Werkzeughalterkörper 32 des Werkzeughalters 30 ist ferner noch ein als Ganzes mit 50 bezeichnetes Werkzeug gehalten, welches beispielsweise einen Schneidplattenhalter 52 mit einer Schneidplatte 54 umfaßt.

Zur exakten Ausrichtung des Werkzeughalters 30 relativ zum Revolver 20 ist beispielsweise ein Revolverkopf 60 nicht nur mit den Auflageflächen 24 versehen, sondern trägt, wie insbesondere in Fig. 2 und 3 dargestellt, beispielsweise auf ihrer Stirnfläche 62 ein erstes Ausrichtelement 64, welches, wie in Fig. 4 dargestellt, als Formschlußelement eine Aussparung 66 aufweist, die sich von einer dem Werkzeughalter 30 zugewandten Seite 68 in das Fixierelement 64 hineinerstreckt und einander gegenüberliegende Fixierflanken 70a und 70b aufweist, welche sich zwischen der dem Werkzeughalter 30 zugewandten Seite 68 des Ausrichtelements 64 und einer Grundseite 72 der Aussparung 66 erstrecken, jedoch vorzugsweise zumindest mit ihren der Grundseite 72 zugewandten Endbereichen im Abstand von der Grundseite 72 enden, so daß zwischen diesen Endbereichen und der Grundseite 72 Flächenabschnitte 73a, b liegen, welche nicht zu einem Formschluß beitragen und beispielsweise ungefähr parallel zueinander verlaufen.

Mit dem ersten Ausrichtelement 64 korrespondiert ein zweites Ausrichtelement 74, welches als Formschlußelement einen zahnähnlichen Vorsprung 76 aufweist, der bei fest am Revolver 20 montiertem Werkzeughalter 30 in die Aussparung 66 eingreift und dabei mit Außenflanken 80a und 80b an den Fixierflanken 70a, b formschlüssig anliegt, jedoch keine Berührung mit den Flächenabschnitten 73a, b hat.

Die beiden Fixierflanken 70a, b sind vorzugsweise so relativ zueinander angeordnet, daß sie quer zu einer Einsteckrichtung 81 des Werkzeughalters 30 einen Abstand voneinander aufweisen, welcher mit zunehmender Erstreckung in Einsteckrichtung 81 geringer wird, so daß beim Einführen des die Außenflanken 80a, b aufweisenden Vorsprungs 76 zwischen die Fixierflanken 70a, b die Außenflanken 80a, b des Vorsprungs 76 spielfrei an die Fixierflanken 70a, b anlegbar sind und in der gespannten Stellung des Werkzeughalters 30 diese spielfreie Stellung aufrechterhalten wird.

Besonders vorteilhaft ist es dabei, wenn die Außenflanken 80a, b konvex, beispielsweise in Form von Zahnflanken eines Zahnrades geformt sind, und die Fixierflanken 70a, b der Aussparung 66 eben ausgebildet sind, so daß die Außenflanken 80a, b und die Fixierflanken 70a, b trotz nicht vollflächiger Anlage aneinander mit einem möglichst großen Anschmiegeradius gegeneinander anliegen, so daß trotzdem eine flächenhafte oder flächenähnliche Anlage entsteht und punkt- oder linienförmige Anlage derselben aneinander vermeidbar ist.

Die Aussparung 66 und der Vorsprung 76 erstrecken sich dabei in einer Ebene 82, welche parallel zur Längsachse 40 des Schafts 28 verläuft, wobei Flankenflächen der Fixierflanken 70a, b und Außenflanken 80a, b sich zusätzlich noch quer zur Ebene 82 erstrecken.

Der zahnähnliche Vorsprung 76 ist beispielsweise einstückig an einem plattenförmigen Ausrichtelementkörper 84 angeformt, welcher auf einer Stirnfläche 86 des Werkzeughalterkörpers 32 montiert ist, wobei die Stirnfläche 86 vorzugsweise mit der Stirnfläche 62 des Revolverkopfs 60 fluchtet.

Auch das erste Ausrichtelement 64 umfaßt einen plattenförmigen Ausrichtelementkörper 88, welcher mit der Aussparung 66 versehen ist und auf der Stirnfläche 62 des Revolverkopfs 60 aufliegt.

Beide Ausrichtelementkörper 84, 88 sind entweder mit dem Werkzeughalterkörper 32 oder dem Revolverkopf 60 mittels Schrauben 90 bzw. 92 verbunden und zusätzlich noch in ihrer exakt justierten Position mittels Stiften 94, 96 fixiert.

Wie in Fig. 2 dargestellt, kann jeder Werkzeugstation 23 ein erstes Ausrichtelement 64 zugeordnet werden, wobei in jeder Werkzeugposition 23 das Ausrichtelement 64 mittels eines mit einem zweiten Ausrichtelement 74 versehenen Meister-Werkzeughalters 100 justierbar ist, der beispielsweise so ausgerichtet wird, daß eine Werkzeugachse 102 parallel zur Spindelachse 16 verläuft.

Entsprechend dieser Ausrichtung des Meister-Werkzeughalters 100 mit dem fest mit diesem verbundenen zweiten Ausrichtelement 74 wird das erste Ausrichtelement 64 an dem Revolverkopf 60 ausgerichtet, beispielsweise mittels der Schrauben 92 fixiert, und nach der Fixierung zusätzlich mit den Stiften 96 mit dem Revolverkopf 60 verstiftet und somit unverschieblich relativ zum Revolverkopf 60 fixiert.

Damit ist jeder einzelnen Werkzeugstation 23 des Revolverkopfs 60 eine eindeutige Drehausrichtung eines jeden Werkzeughalters 30 gegenüber einer Drehung um die Längsachse 40 des Schaftes 28 vorgebbar, so daß jeder in Arbeitsposition stehende Werkzeughalter 30 in jeder Werkzeugstation 23 exakt dieselbe Ausrichtung relativ zur Spindelachse 16 hat.

In gleicher Weise ist das zweite Ausrichtelement 74 an jedem Werkzeughalterkörper 32 dadurch justierbar, daß dieser auf eine zeichnerisch nicht dargestellte, jedoch mit einem fest ausgerichteten ersten Ausrichtelement 64 versehene Meister-Werkzeugstation gesetzt und so ausgerichtet wird, daß die Werkzeugachse 102 eine definierte Orientierung relativ zur Meister-Werkzeugstation aufweist. In dieser Stellung des Werkzeughalterkörpers 32 wird das zweite Ausrichtelement 74 beispielsweise mittels der Schrauben 90 fixiert und anschließend in dieser Stellung noch durch die Stifte 94 unverschieblich gegenüber dem Werkzeughalterkörper 32 fixiert.

Jeder Werkzeughalter 30 mit einem derart justierten zweiten Ausrichtelement 74 ist somit in jede mit einem entsprechend den vorstehenden Ausführungen justierten ersten Ausrichtelement 64 versehene Werkzeugstation 23 des Revolverkopfs 60 einsetzbar, wobei die Werkzeugachse 102 in jeder in Arbeitsposition stehenden Werkzeugstation 23 dieselbe Orientierung aufweist.

Bei einem zweiten Ausführungsbeispiel einer erfindungsgemäßen Werkzeugfixiereinrichtung ist das erste Ausrichtelement 64 nicht nur auf der vorderen Stirnfläche 62 des Revolverkopfs 60 angeordnet, sondern auch an einer hinteren Stirnfläche 112 und in gleicher Weise ist ein zweites Ausrichtelement 74 nicht nur an der der Stirnfläche 62 korrespondierenden Stirnfläche 86 des Werkzeughalterkörpers 32 gehalten, sondern auch an der der hinteren Stirnfläche 112 entsprechenden Stirnfläche 114.

Eine derartige doppelte Anordnung eines Paares aus einem ersten und einem zweiten Ausrichtelement ist insbesondere dann vorteilhafterweise einsetzbar, wenn große Zerspanungskräfte von dem Revolverkopf 60 auf den Werkzeughalter 30 zu übertragen sind und somit auch große Momente im Hinblick auf eine Verdrehung des Werkzeughalters 30 um die Längsachse 40 auftreten.

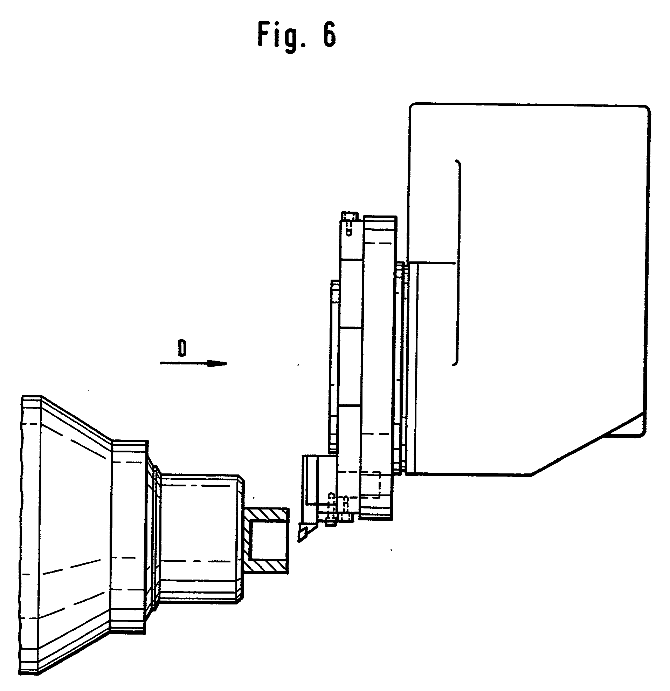

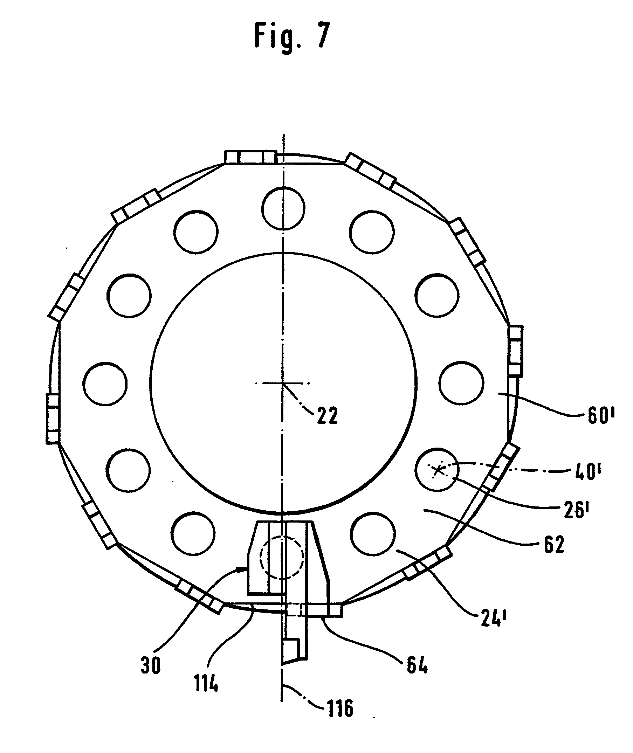

Bei einem dritten Ausführungsbeispiel einer erfindungsgemäßen Werkzeugfixiereinrichtung, dargestellt in Fig. 6 und 7, ist der Revolverkopf 60' mit Aufnahmen 26' versehen, deren Längsachsen 40' parallel zur Revolverschaltachse 22 verlaufen, so daß beispielsweise die vordere Stirnfläche 62 oder auch die hintere Stirnfläche des Revolverkopfs 60' die Aufnahmen 26' umgebende Auflageflächen 24' für die Anlageflächen 34 der Werkzeughalter 30 bilden.

In diesem Fall sind die ersten Ausrichtelemente 64 an parallel zur Revolverschaltachse 22 verlaufenden Mantelflächen 114, vorzugsweise an ebenen Abschnitten derselben, angeordnet und in gleicher Weise wie beim ersten Ausführungsbeispiel mit dem Revolverkopf 60 verbunden.

Die an den Stirnflächen 86 der Werkzeughalterkörper 32 gehaltenen zweiten Ausrichtelemente 74 greifen dann in gleicher Weise, wie beim ersten Ausführungsbeispiel beschrieben, mit ihren zahnähnlichen Vorsprüngen 76 in die Aussparungen 66 ein, um eine formschlüssige Verdrehfixierung des Werkzeughalters 30 relativ zur Längsachse 40 des Schafts 28 zu bilden.

Beispielsweise sind in diesem Fall die Ausrichtelemente 64 und 74 asymmetrisch zu die Revolverschaltachse 22 und die Längsachse 40' schneidenden Geraden 116 angeordnet.

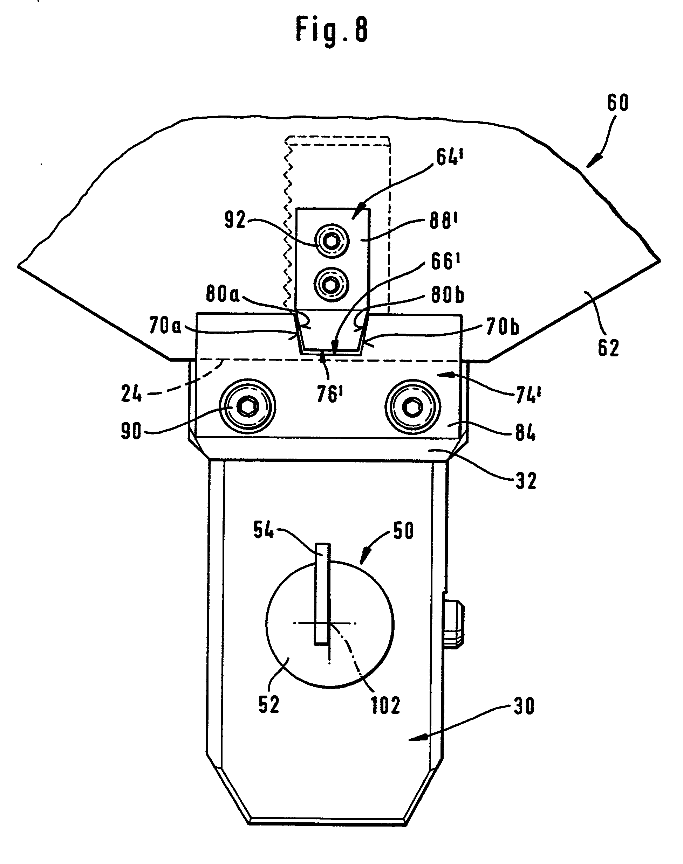

Bei einem vierten Ausführungsbeispiel, dargestellt in Fig. 8, umfaßt das erste Ausrichtelement 64 im Gegensatz zu den voranstehend beschriebenen Ausführungsbeispielen das Formschlußelement 76' mit den Außenflanken 80a und 80b, während das zweite Ausrichtelement 74, welches am Werkzeughalterkörper 32 angeordnet ist, das Formschlußelement 66' mit den Fixierflanken 70a und 70b aufweist.

Im vorliegenden Fall sind die Fixierflanken 70a und 70b so ausgebildet, daß sie ebene Flankenflächen bilden, welche die Schenkel eines Trapezes darstellen.

Ferner ist das Ausrichtelement 64' so ausgebildet, daß es einen Ausrichtelementkörper 88' aufweist, welcher sich parallel zur Stirnfläche 62 des Revolverkopfes 60 lediglich über eine Breite erstreckt, welche einer Breite des das Formschlußelement bildenden zahnähnlichen Vorsprungs 76 entspricht.

Aber auch bei diesem Ausführungsbeispiel liegt das Formschlußelement 76' auf einer dem Werkzeughalter 30 abgewandten Seite der durch die Auflagefläche 24 definierten Ebene.

Zur Herstellung des Formschlußes ist es daher erforderlich, daß auch das Formschlußelement 66' auf dieser Seite der durch die Auflagefläche 24 definierten Ebene liegt. Daher erstreckt sich der Ausrichtelementkörper 84 ausgehend von seinem an dem Werkzeughalterkörper 32 anliegenden Bereich über die Anlagefläche 34 desselben hinaus und übergreift in diesem Fall die Stirnfläche 62 des Revolverkopfes 60.

Darüber hinaus ist bei dem vierten Ausführungsbeispiel vorgesehen, daß sowohl das Ausrichtelement 64' als auch das Ausrichtelement 74' mittels Schrauben 92 bzw. 90 an dem Revolverkopf 60 bzw. dem Werkzeughalterkörper 32 fixiert sind, wobei mittels der Schrauben 92 bzw. 90 eine kraftschlüssige Fixierung der Ausrichtelement 64' bzw. 74' in der justierten Stellung erfolgt, die im Fall von Kollisionen des Werkzeugs überwindbar ist.

Im übrigen ist das vierte Ausführungsbeispiel in gleicher Weise ausgebildet wie das erste Ausführungsbeispiel, so daß auf die Ausführungen zum ersten Ausführungsbeispiel vollinhaltlich Bezug genommen wird.

## Patentansprüche

1. Werkzeughalter für Werkzeugmaschinen, umfassend einen das Werkzeug tragenden Werkzeughalterkörper (32), welcher eine Anlagefläche (34) aufweist und einen von dieser abstehenden Schaft (28) zum Spannen des Werkzeughalters (30) in einer Werkzeugstation (23) eines Werkzeugträgers (20) trägt, und ein Ausrichtelement (74, 74') einer zwischen Werkzeughalterkörper (32) und Werkzeugträger (20) wirksamen Ausrichteinrichtung zur Positionierung des Werkzeughalterkörpers (32) relativ zum Werkzeugträger (20),
**dadurch gekennzeichnet, dass** das Ausrichtelement (74, 74') einen Ausrichtelementkörper (84) aufweist, welcher auf einer Stirnfläche (86) des Werkzeughalterkörpers (32) justierbar angeordnet ist und dass das Ausrichtelement (74, 74') ein Formschlusselement (76, 66') umfasst, welches bei in der Aufnahme (26) eingespanntem Schaft (28) und an einer Auflagefläche (24) des Werkzeugträgers (20) anliegender Anlagefläche (34) spielfrei in ein Formschlusselement (66, 76') des Werkzeugträgers (20) eingreift, um den Werkzeughalterkörper (32) relativ zum Werkzeugträger (20) in einer einzigen Stellung ausgerichtet zu fixieren.

2. Werkzeughalter für Werkzeugmaschinen umfassend einen das Werkzeug tragenden Werkzeughalterkörper (32), welcher zum Fixieren in einer Werkzeugstation (23) eines Werkzeugträgers (20) eine Anlagefläche (34) aufweist und einen von dieser abstehenden Schaft (28) zum Spannen des Werkzeughalters (30) trägt, wobei bei fixiertem Werkzeughalter die Anlagefläche (34) dann gegen eine Auflagefläche (24) des Werkzeugträgers (20) anliegt, wenn der Werkzeughalter (30) mit seinem Schaft (28) in eine Aufnahme (26) des Werkzeugträgers (20) eingespannt ist, und ein Ausrichtelement (74, 74') einer zwischen Werkzeughalterkörper (32) und Werkzeugträger (20) wirksamen Ausrichteinrichtung zur Positionierung des Werkzeughalterkörpers (32) relativ zum Werkzeugträger (20),
**dadurch gekennzeichnet, dass** das Ausrichtelement (74, 74') einen Ausrichtelementkörper (84) aufweist, der sich ausgehend vom Werkzeughalterkörper (32) über dessen Anlagefläche (34) hinaus erstreckt und ein Formschlusselement (76, 66') trägt, welches bei gegen die Auflagefläche (24) anliegender Anlagefläche (34) auf einer dem Werkzeughalter (30) abgewandten Seite der durch die Auflagefläche (24) definierten Ebene liegt und dabei mit einem Ausrichtelement (64, 64') des Werkzeugträgers (20) spielfrei in Eingriff steht, um den Werkzeughalterkörper (32) relativ zum Werkzeugträger (20) in einer einzigen Stellung ausgerichtet fixieren.

3. Werkzeughalter nach Anspruch 1 oder 2, **dadurch gekennzeichnet, dass** die Formschlusselemente (66, 66' ,76, 76') durch eine Bewegung in Einsteckrichtung (81) des Werkzeughalters (30) in der Werkzeugstation (23) in Eingriff bringbar sind.

4. Werkzeughalter nach einem der voranstehenden Ansprüche, **dadurch gekennzeichnet, dass** eines der Formschlusselemente eine Aufnahme (66, 66') mit einander zugewandten Fixierflanken (70a,b) aufweist.

5. Werkzeughalter nach einem der voranstehenden Ansprüche, **dadurch gekennzeichnet, dass** ein anderes der Formschlusselemente einen Einsatz (76, 76') für die Aufnahme (66, 66') mit in entgegengesetzte Richtungen weisenden Außenflanken (80a,b) aufweist.

6. Werkzeughalter nach Anspruch 4 oder 5, **dadurch gekennzeichnet, dass** die Fixierflanken(70a,b) quer zu der Einsteckrichtung (81) einen Abstand aufweisen, welcher mit zunehmender Erstreckung der Fixierflanken (70a,b) in Einsteckrichtung (81) geringer wird.

7. Werkzeughalter nach Anspruch 5 oder 6, **dadurch gekennzeichnet, dass** die Fixierflanken (70a,b) und die Außenflanken (80a,b) aneinander angepasst sind und zumindest in einer Richtung (81) linienförmig aneinander anliegen.

8. Werkzeughalter nach einem der Ansprüche 4 bis 7, **dadurch gekennzeichnet, dass** die Fixierflanken (70a,b) konvex ausgebildet sind.

9. Werkzeughalter nach einem der Ansprüche 5 bis 7, **dadurch gekennzeichnet, dass** die Außenflanken (80a,b) konvex ausgebildet sind.

10. Werkzeughalter nach einem der voranstehenden Ansprüche, **dadurch gekennzeichnet, dass** die Formschlusselemente (66, 66', 76, 76') beim formschlüssigen Ineinandergreifen im Wesentlichen flächig aneinander anliegen.

11. Werkzeughalter nach Anspruch 10, **dadurch gekennzeichnet, dass** die Formschlusselemente (66, 66', 76, 76') mit Passflächen aneinander anliegen.

12. Werkzeughalter nach einem der voranstehenden Ansprüche, **dadurch gekennzeichnet, dass** das Formschlusselement (76, 66') einstückig an das Ausrichtelement (74) angeformt ist.

13. Werkzeughalter nach einem der voranstehenden Ansprüche, **dadurch gekennzeichnet, dass** das Ausrichtelement (74) nach seiner exakten Justierung relativ zum Werkzeughaltekörper (32) in der justierten Stellung fixierbar ist.

14. Werkzeughalter nach einem der voranstehenden Ansprüche, **dadurch gekennzeichnet, dass** das Ausrichtelement (74) nach seiner exakten Justierung relativ zum Werkzeughalterkörper (32) unverschiebbar an diesem fixiert ist.

15. Werkzeughalter nach Anspruch 14, **dadurch gekennzeichnet, dass** das Ausrichtelement (74) über eine Formschlussverbindung (96) unverschiebbar mit dem Werkzeughalterkörper (32) verbunden ist.

16. Werkzeughalter nach einem der voranstehenden Ansprüche, **dadurch gekennzeichnet, dass** das Ausrichtelement (74) bei an dem Werkzeugträger (20) fixiertem Werkzeughalter (30) mit seinem Formschlusselement (76, 66') mit einem dem Werkzeugträger (20) zugeordneten Formschlusselement (66, 76') in Eingriff steht, welches auf einer dem Werkzeughalter (30) abgewandten Seite einer durch die Auflagefläche (24) definierten Ebene liegt.

17. Werkzeugmaschine, umfassend einen Werkzeugträger (20) mit einer Werkzeugstation (23), welche eine Auflagefläche (24) für eine Anlagefläche (34) eines Werkzeughalters (30) und eine Aufnahme (26) für einen Schaft (28) des Werkzeughalters (30) aufweist, wobei die Anlagefläche (34) dann gegen die Auflagefläche (24) anliegt, wenn der Werkzeughalter (30) mit seinem Schaft (28) in der Aufnahme (26) eingespannt ist, und ein Ausrichtelement (64) einer zwischen Werkzeughalterkörper (32) und Werkzeugträger (20) wirksamen Ausrichteinrichtung zur Positionierung des Werkzeughalterkörpers (32) relativ zum Werkzeugträger (20) ,
**dadurch gekennzeichnet, dass** das Ausrichtelement (64, 64') einen Ausrichtelementkörper (84) aufweist, welcher auf einer Stirnfläche (86) des Werkzeughalterkörpers (32) justierbar angeordnet ist, und dass das Ausrichtelement (64) ein Formschlusselement (66, 76') umfasst, welches bei in der Aufnahme (26) eingespanntem Schaft (28) und an einer Auflagefläche (24) des Werkzeugträgers (20) anliegender Anlagefläche (34) spielfrei in ein Formschlusselement (76, 66') am Werkzeughalter (30) eingreift, um den Werkzeughalterkörper (32) relativ zum Werkzeugträger (20) in einer einzigen Stellung ausgerichtet zu fixieren.

18. Werkzeugmaschine, umfassend einen Werkzeugträger (20) mit einer Werkzeugstation (23), welche eine Auflagefläche (24) für eine Anlagefläche (34) eines Werkzeughalters (30) und eine Aufnahme (26) für einen Schaft (28) des Werkzeughalters (30) aufweist, wobei die Anlagefläche (34) dann gegen die Auflagefläche (24) anliegt, wenn der Werkzeughalter (30) mit seinem Schaft (28) in der Aufnahme (26) eingespannt ist, und ein Ausrichtelement (64, 64') einer zwischen Werkzeughalterkörper (32) und Werkzeugträger (20) wirksamen Ausrichteinrichtung zur Positionierung des Werkzeughalterkörpers (32) relativ zum Werkzeugträger (20),
**dadurch gekennzeichnet, dass** das Ausrichtelement (64, 64') am Werkzeugträger (20) auf einer dem Werkzeughalter (30) abgewandten Seite der durch die Auflagefläche (24) definierten Ebene liegt, und dass das Ausrichtelement (64, 64') spielfrei mit dem Ausrichtelement (74, 74') des Werkzeughalters (30) in Eingriff bringbar ist, um den Werkzeughalterkörper (32) relativ zum Werkzeugträger (20) in einer einzigen Stellung ausgerichtet zu fixieren.

19. Werkzeugmaschine nach Anspruch 17 oder 18, **dadurch gekennzeichnet, dass** die Formschlusselemente (66, 66',76, 76') durch eine Bewegung in Einsteckrichtung (81) des Werkzeughalters (30) in der Werkzeugstation (23) in Eingriff bringbar sind.

20. Werkzeugmaschine nach einem der Ansprüche 17 bis 19, **dadurch gekennzeichnet, dass** eines der Formschlusselemente eine Aufnahme (66, 66') mit einander zugewandten Fixierflanken (70a,b) aufweist.

21. Werkzeugmaschine nach einem der Ansprüche 17 bis 20, **dadurch gekennzeichnet, dass** ein anderes der Formschlusselemente einen Einsatz (76, 76') für die Aufnahme (66, 66') mit in entgegengesetzte Richtungen weisenden Außenflanken (80a,b) aufweist.

22. Werkzeugmaschine nach Anspruch 20 oder 21, **dadurch gekennzeichnet, dass** die Fixierflanken (70a,b) quer zu der Einsteckrichtung (81) einen Abstand aufweisen, welcher mit zunehmender Erstreckung der Fixierflanken (70a,b) in Einsteckrichtung (81) geringer wird.

23. Werkzeugmaschine nach Anspruch 21 oder 22, **dadurch gekennzeichnet, dass** die Fixierflanken (70a,b) und die Außenflanken (80a,b) aneinander angepasst sind und zumindest in einer Richtung (81) linienförmig aneinander anliegen.

24. Werkzeugmaschine nach einem der Ansprüche 20 bis 23, **dadurch gekennzeichnet, dass** die Fixierflanken (70a,b) konvex ausgebildet sind.

25. Werkzeugmaschine nach einem der Ansprüche 21 bis 24, **dadurch gekennzeichnet, dass** die Außenflanken (80a, b) konvex ausgebildet sind.

26. Werkzeugmaschine nach einem der Ansprüche 17 bis 25, **dadurch gekennzeichnet, dass** die Formschlusselemente (66,76) beim formschlüssigen Ineinandergreifen im Wesentlichen flächig aneinander anliegen.

27. Werkzeugmaschine nach Anspruch 26, **dadurch gekennzeichnet, dass** die Formschlusselemente (66,76) mit Passflächen aneinander anliegen.

28. Werkzeugmaschine nach einem der Ansprüche 17 bis 27, **dadurch gekennzeichnet, dass** die Formschlusselemente (66,76') einstückig an das Ausrichtelement (64) angeformt sind.

29. Werkzeugmaschine nach einem der Ansprüche 17 bis 28, **dadurch gekennzeichnet, dass** das Ausrichtelement (64) nach seiner exakten Justierung relativ zum Werkzeugträger (20) in der justierten Stellung fixierbar ist.

30. Werkzeugmaschine nach einem der Ansprüche 17 bis 29, **dadurch gekennzeichnet, dass** das Ausrichtelement (64) nach seiner exakten Justierung relativ zum Werkzeugträger (20) unverschiebbar an diesen fixiert ist.

31. Werkzeugmaschine nach Anspruch 30, **dadurch gekennzeichnet, dass** das Ausrichtelement (64) über eine Formschlussverbindung (94) unverschiebbar mit dem Werkzeugträger (20) verbunden ist.

32. Werkzeugmaschine nach einem der Ansprüche 17 bis 31, **dadurch gekennzeichnet, dass** das Ausrichtelement (64) und das diesem zugeordnete Formschlusselement (66, 76') auf einer dem Werkzeughalter (30) abgewandten Seite einer durch die Auflagefläche (24) definierten Ebene liegen.

33. Werkzeugmaschine nach einem der Ansprüche 17 bis 32, **dadurch gekennzeichnet, dass** der Werkzeugträger (20) eine Vielzahl von Werkzeugstationen (23) aufweist, in welche Werkzeughalter (30) einsetzbar sind, dass mindestens zwei Werkzeugstationen (23) jeweils mit dem Ausrichtelement (64) versehen sind, welches so justiert ist, dass ein in jede dieser Werkzeugstationen (23) eingesetzter und mit einem zweiten Ausrichtelement (74) versehener Werkzeughalter (30) in seiner jeweiligen Arbeitsposition identisch ausgerichtet ist.

## Claims

1. Tool holder for machine tools, comprising a tool holder body (32) bearing the tool and having a contact surface (34) and a shaft (28) projecting therefrom for clamping the tool holder (30) in a tool station (23) of a tool carrier (20), and an aligning element (74, 74') of an aligning device operative between tool holder body (32) and tool carrier (20) for positioning the tool holder body (32) relative to the tool carrier (20),
**characterized in that** the aligning element (74, 74') comprises an aligning element body (84) which is adjustably arranged on an end face (86) of the tool holder body (32), and **in that** the aligning element (74, 74') has a form-fitting element (76, 66') which, when the shaft (28) is clamped in the receiving means (26), and a contact surface (34) abuts on a support surface (24) of the tool carrier (20), engages a form-fitting element (66, 76') of the tool carrier (20) without clearance in order to fix the tool holder body (32) so as to be oriented in a single position relative to the tool carrier (20).

2. Tool holder for machine tools, comprising a tool holder body (32) bearing the tool, the tool holder body having a contact surface (34) for fixing in a tool station (23) of a tool carrier (20) and carrying a shaft (28) projecting from the contact surface for clamping the tool holder (30), the contact surface (34), while the tool holder is fixed, abutting against a support surface (24) of the tool carrier (20) when the tool holder (30) is clamped with its shaft (28) in a receiving means (26) of the tool carrier (20), and an aligning element (74, 74') of an aligning device operative between tool holder body (32) and tool carrier (20) for positioning the tool holder body (32) relative to the tool carrier (20),
**characterized in that** the aligning element (74, 74') has an aligning element body (84) which extends from the tool holder body (32) beyond its contact surface (34) and carries a form-fitting element (76, 66') which, when the contact surface (34) abuts against the support surface (24), is located on a side, facing away from the tool holder (30), of the plane defined by the support surface (24) and engages an aligning element (64, 64') of the tool carrier (20) without clearance in order to fix the tool holder body (32) so as to be oriented in a single position relative to the tool carrier (20).

3. Tool holder in accordance with claim 1 or 2, **characterized in that** the form-fitting elements (66, 66', 76, 76') are adapted to be brought into engagement in the tool station (23) by a movement in insertion direction (81) of the tool holder (30).

4. Tool holder in accordance with any one of the preceding claims, **characterized in that** one of the form-fitting elements has a receiving means (66, 66') with facing fixing flanks (70a, b).

5. Tool holder in accordance with any one of the preceding claims, **characterized in that** another one of the form-fitting elements has an insert (76, 76') for the receiving means (66, 66') with outer flanks (80a, b) pointing in opposite directions.

6. Tool holder in accordance with claim 4 or 5, **characterized in that** the fixing flanks (70a, b) have transversely to the insertion direction (81) a distance becoming smaller with increasing extension of the fixing flanks (70a, b) in insertion direction (81).

7. Tool holder in accordance with claim 5 or 6, **characterized in that** the fixing flanks (70a, b) and the outer flanks (80a, b) are adapted to one another and abut on one another linearly at least in one direction (81).

8. Tool holder in accordance with any one of claims 4 to 7, **characterized in that** the fixing flanks (70a, b) are of a convex design.

9. Tool holder in accordance with any one of claims 5 to 7, **characterized in that** the outer flanks (80a, b) are of a convex design.

10. Tool holder in accordance with any one of the preceding claims,
**characterized in that** the form-fitting elements (66, 66', 76, 76') abut essentially areally on one another during their form-fitting engagement in one another.

11. Tool holder in accordance with claim 10, **characterized in that** the form-fitting elements (66, 66', 76, 76') abut on one another with fitting areas.

12. Tool holder in accordance with any one of the preceding claims,
**characterized in that** the form-fitting element (76, 66') is formed in one piece on the aligning element (74).

13. Tool holder in accordance with any one of the preceding claims,
**characterized in that** after its exact adjustment relative to the tool holder body (32) the aligning element (74) is fixable in the adjusted position.

14. Tool holder in accordance with any one of the preceding claims,
**characterized in that** after its exact adjustment relative to the tool holder body (32) the aligning element (74) is fixed in position thereon so as to be non-displaceable.

15. Tool holder in accordance with claim 14, **characterized in that** the aligning element (74) is non-displaceably connected to the tool holder body (32) via a form-fitting connection (96).

16. Tool holder as defined in any one of the preceding claims,
**characterized in that** when the tool holder (30) is fixed on the tool carrier (20), the aligning element (74) with its form-fitting element (76, 66') is in engagement with a form-fitting element (66, 76') which is associated with the tool carrier (20) and is located on a side, facing away from the tool holder (30), of a plane defined by the support surface (24).

17. Machine tool, comprising a tool carrier (20) with a tool station (23) having a support surface (24) for a contact surface (34) of a tool holder (30) and a receiving means (26) for a shaft (28) of the tool holder (30), the contact surface (34) abutting against the support surface (24) when the tool holder (30) is clamped with its shaft (28) in the receiving means (26), and an aligning element (64) of an aligning device operative between tool holder body (32) and tool carrier (20) for positioning the tool holder body (32) relative to the tool carrier (20),
**characterized in that** the aligning element (64, 64') comprises an aligning element body (84) which is adjustably arranged on an end face (86) of the tool holder body (32), and **in that** the aligning element (64) has a form-fitting element (66, 76') which, when the shaft (28) is clamped in the receiving means (26), and a contact surface (34) abuts on a support surface (24) of the tool carrier (20), engages a form-fitting element (76, 66') on the tool holder (30) without clearance in order to fix the tool holder body (32) so as to be oriented in a single position relative to the tool carrier (20).

18. Machine tool, comprising a tool carrier (20) with a tool station (23) having a support surface (24) for a contact surface (34) of a tool holder (30) and a receiving means (26) for a shaft (28) of the tool holder (30), the contact surface (34) abutting against the support surface (24) when the tool holder (30) is clamped with its shaft (28) in the receiving means (26), and an aligning element (64, 64') of an aligning device operative between tool holder body (32) and tool carrier (20) for positioning the tool holder body (32) relative to the tool carrier (20),
**characterized in that** the aligning element (64, 64') on the tool carrier (20) is located on a side, facing away from the tool holder (30), of the plane defined by the support surface (24), and **in that** the aligning element (64, 64') is adapted to be brought into engagement with the aligning element (74, 74') of the tool holder (30) without clearance in order to fix the tool holder body (32) so as be oriented in a single position relative to the tool carrier (20).

19. Machine tool in accordance with claim 17 or 18, **characterized in that** the form-fitting elements (66, 66', 76, 76') are adapted to be brought into engagement in the tool station (23) by a movement in insertion direction (81) of the tool holder (30).

20. Machine tool in accordance with any one of claims 17 to 19,
**characterized in that** one of the form-fitting elements has a receiving means (66, 66') with facing fixing flanks (70a, b).

21. Machine tool in accordance with any one of claims 17 to 20,
**characterized in that** another one of the form-fitting elements has an insert (76, 76') for the receiving means (66, 66') with outer flanks (80a, b) pointing in opposite directions.

22. Machine tool in accordance with claim 20 or 21, **characterized in that** the fixing flanks (70a, b) have transversely to the insertion direction (81) a distance becoming smaller with increasing extension of the fixing flanks (70a, b) in insertion direction (81).

23. Machine tool in accordance with claim 21 or 22, **characterized in that** the fixing flanks (70a, b) and the outer flanks (80a, b) are adapted to one another and abut on one another linearly at least in one direction (81).

24. Machine tool in accordance with any one of claims 20 to 23,
**characterized in that** the fixing flanks (70a, b) are of a convex design.

25. Machine tool in accordance with any one of claims 21 to 24,
**characterized in that** the outer flanks (80a, b) are of a convex design.

26. Machine tool in accordance with any one of claims 17 to 25,
**characterized in that** the form-fitting elements (66, 76) abut essentially areally on one another during their form-fitting engagement in one another.

27. Machine tool in accordance with claim 26, **characterized in that** the form-fitting elements (66, 76) abut on one another with fitting areas.

28. Machine tool in accordance with any one of claims 17 to 27,
**characterized in that** the form-fitting elements (66, 76') are formed in one piece on the aligning element (74).

29. Machine tool in accordance with any one of claims 17 to 28,
**characterized in that** after its exact adjustment relative to the tool carrier (20) the aligning element (64) is fixable in the adjusted position.

30. Machine tool in accordance with any one of claims 17 to 29,
**characterized in that** after its exact adjustment relative to the tool carrier (20) the aligning element (64) is fixed in position thereon so as to be non-displaceable.

31. Machine tool in accordance with claim 30, **characterized in that** the aligning element (64) is non-displaceably connected to the tool carrier (20) via a form-fitting connection (94).

32. Machine tool in accordance with any one of claims 17 to 31,
**characterized in that** the aligning element (64) and the form-fitting element (66, 76') associated therewith are located on a side, facing away from the tool holder (30), of a plane defined by the support surface (24).

33. Machine tool in accordance with any one of claims 17 to 32,
**characterized in that** the tool carrier (20) has a plurality of tool stations (23), into which tool holders (30) are insertable, **in that** at least two tool stations (23) are each provided with the aligning element (64) which is adjusted such that a tool holder (30) inserted into each of these tool stations (23) and provided with a second aligning element (74) is identically aligned in its respective operating position.

## Revendications

1. Porte-outil pour machines-outils, comportant un corps de porte-outil (32) qui porte l'outil, qui comporte une surface d'appui (34) et qui porte une broche (28) éloignée de la surface d'appui (34) pour le serrage du le porte-outil (30) dans une station d'outils (23) d'un support d'outils (20), et un élément de positionnement (74, 74') d'un dispositif de positionnement, agissant entre le corps de porte-outil (32) et le support d'outils (20) pour le positionnement du corps de porte-outil (32) par rapport au support d'outils (20), **caractérisé en ce que** l'élément de positionnement (74, 74') comporte un corps (84) d'élément de positionnement qui est disposé de manière ajustable sur une face frontale (86) du corps de porte-outil (32), et **en ce que** l'élément de positionnement (74, 74') comporte un élément de fixation par complémentarité de forme (76, 66') qui, lorsque la broche (28) est serrée dans le réceptacle (26) et la surface d'appui (34) est en appui contre une surface de repos (24) du support d'outils (20), vient en prise avec un élément de fixation par complémentarité de forme (66, 76') du support d'outils (20), afin de fixer le corps de porte-outil (32) aligné par rapport au support d'outils (20) dans une seule position.

2. Porte-outil pour machines-outils, comportant un corps de porte-outil (32) qui porte l'outil et qui comporte une surface d'appui (34) pour la fixation dans une station d'outil (23) d'un support d'outils (20) et porte une broche (28) éloignée de la surface d'appui et destinée à serrer le porte-outil (30), la surface d'appui (34) venant alors en appui contre sur une surface de repos (24) du support d'outils (20) lorsque le porte-outil est fixé, quand le porte-outil (30) est serré avec sa broche (28) dans un réceptacle (26) du support d'outils (20), et un élément de positionnement (74, 74') d'un dispositif de positionnement, agissant entre le corps de porte-outil (32) et le support d'outils (20) pour le positionnement du corps de porte-outil (32) par rapport au support d'outils (20), **caractérisé en ce que** l'élément de positionnement (74, 74') comporte un corps (84) d'élément de positionne-ment, qui s'étend depuis le corps de porte-outil (32) au-delà de la surface d'appui (34) de celui-ci et porte un élément de fixation par complémen-tarité de forme (76, 66') qui, lorsque la surface d'appui (34) est en appui contre la surface de repos (24), est situé sur un côté, détourné du porte-outil (30), du plan défini par la surface de repos (24) et, en l'occurrence, est en prise sans jeu dans un élément de positionnement (64, 64') du support d'outils (20), afin de fixer le corps de porte-outil (32) aligné par rapport au support d'outils (20) dans une seule position.

3. Porte-outil selon la revendication 1 ou 2, **caractérisé en ce que** les éléments de fixation par complémentarité de forme (66, 66', 76, 76') peuvent être amenés en prise dans la station d'outil (23) sous l'effet d'un mouvement dans le sens d'enfichage (81) du porte-outil (30).

4. Porte-outil selon l'une quelconque des revendications précédentes, **caractérisé en ce que** l'un des éléments de fixation par complémentarité de forme comporte un réceptacle (66, 66') avec des flancs de fixation (70a, b) orientés l'un vers l'autre.

5. Porte-outil selon l'une quelconque des revendications précédentes, **caractérisé en ce qu'**un autre des éléments de fixation par complémentarité de forme comporte un saillant (76, 76') à insérer dans le réceptacle (66, 66') avec des flancs extérieurs (80a, b) orientés dans des sens opposés.

6. Porte-outil selon la revendication 4 ou 5, **caractérisé en ce que** transversalement à la direction d'enfichage (81), les flancs de fixation (70a, b) sont situés à une distance l'un de l'autre qui diminue au fur et à mesure de l'extension des flancs de fixation (70a, b) dans le sens d'enfichage (81).

7. Porte-outil selon la revendication 5 ou 6, **caractérisé en ce que** les flancs de fixation (70a, b) et les flancs extérieurs (80a, b) sont adaptés l'un à l'autre et sont en appui linéaire-ment l'un contre l'autre au moins selon une direction (81).

8. Porte-outil selon l'une quelconque des revendications 4 à 7, **caractérisé en ce que** les flancs de fixation (70a, b) sont réalisés de manière convexe.

9. Porte-outil selon l'une quelconque des revendications 5 à 7, **caractérisé en ce que** les flancs extérieurs (80a,b) sont réalisés de manière convexe.

10. Porte-outil selon l'une quelconque des revendications précédentes, **caractérisé en ce que** les éléments de fixation par complémentarité de forme (66, 66', 76, 76') s'appuient l'un contre l'autre sensiblement à plat lorsqu'ils sont en prise par conjugaison de forme.

11. Porte-outil selon la revendication 10, **caractérisé en ce que** les éléments de fixation par complémentarité de forme (66, 66', 76, 76') s'appuient l'un contre l'autre par des surfaces ajustées.

12. Porte-outil selon l'une quelconque des revendications précédentes, **caractérisé en ce que** l'élément de fixation par complémentarité de forme (76, 66') est formé d'un seul tenant sur l'élément de positionnement (74).

13. Porte-outil selon l'une quelconque des revendications précédentes, **caractérisé en ce qu'**après son ajustement exact par rapport au corps de porte-outil (32), l'élément de positionnement (74) peut être fixé dans la position ajustée.

14. Porte-outil selon l'une quelconque des revendications précédentes, **caractérisé en ce qu'**après son ajustement exact par rapport au corps de porte-outil (32), l'élément de positionnement (74) est fixé contre ce dernier de manière immo-bile en translation.

15. Porte-outil selon la revendication 14, **caractérisé en ce que** l'élément de positionnement (74) est relié au corps de porte-outil (32) de manière immobile en translation par l'intermédiaire d'une liaison par complémentarité de forme (96).

16. Porte-outil selon l'une quelconque des revendications précédentes, **caractérisé en ce que** l'élément de positionnement (74), lorsque le porte-outil (30) est fixé sur le support d'outils (20), est en prise par son élément de fixation par complémentarité de forme (76, 66') avec un élément de fixation par complémentarité de forme (66, 76'), qui est associé au support d'outils (20) et qui se situe sur un côté, détourné du porte-outil (30), d'un plan défini par la surface de repos (24).

17. Machine-outil comportant un support d'outils (20) avec une station d'outil (23), qui comporte une surface de repos (24) pour une surface d'appui (34) d'un porte-outil (30) et un réceptacle (26) pour une broche (28) du porte-outil (30), la surface d'appui (34) étant alors en appui contre la surface de repos (24) lorsque le porte-outil (30) est serré avec sa broche (28) dans le réceptacle (26), et un élément de posi-tionnement (64) d'un dispositif de positionne-ment, agissant entre le corps de porte-outil (32) et le support d'outils (20) pour le positionne-ment du corps de porte-outil (32) par rapport au support d'outils (20), **caractérisée en ce que** l'élément de positionnement (64, 64') comporte un corps (84) d'élément de positionnement qui est disposé de manière ajustable sur une face fron-tale (86) du corps de porte-outil (32), et **en ce que** l'élément de positionnement (64) comporte un élément de fixation par complémentarité de forme (66, 76') qui, lorsque la broche (28) est serrée dans le réceptacle (26) et la surface d'appui (34) est en appui contre une surface de repos (24) du support d'outils (20), s'engage sans jeu dans un élément de fixation par complémentarité de forme (76, 66') sur le porte-outil (30), afin de fixer le corps de porte-outil (32) aligné par rapport au support d'outils (20) dans une seule position.

18. Machine-outil, comportant un support d'outils (20) avec une station d'outil (23), qui comporte une surface de repos (24) pour une surface d'appui (34) d'un porte-outil (30) et un récep-tacle (26) pour une broche (28) du porte-outil (30), la surface d'appui (34) étant alors en appui contre la surface de repos (24) lorsque le porte-outil (30) est serré avec sa broche (28) dans le réceptacle (26), et un élément de posi-tionnement (64, 64') d'un dispositif de posi-tionnement, agissant entre le corps de porte-outil (32) et le support d'outils (20) pour le positionnement du corps de porte-outil (32) par rapport au support d'outils (20), **caractérisée en ce que** l'élément de positionnement (64, 64') sur le support d'outils (20) est situé sur un côté, détourné du porte-outil (30), du plan défini par la surface de repos (24), et **en ce que** l'élément de positionnement (64, 64') peut être amené en prise sans jeu dans un élément de positionnement (74, 74') du porte-outil (30), afin de fixer le corps de porte-outil (32) aligné par rapport au support d'outils (20) dans une seule position.

19. Machine-outil selon la revendication 17 ou 18, **caractérisée en ce que** les éléments de fixa-tion par complémentarité de forme (66, 66', 76, 76') peuvent être amenés en prise dans la station d'outil (23) sous l'effet d'un mouvement dans le sens d'enfichage (81) du porte-outil (30).

20. Machine-outil selon l'une quelconque des revendications 17 à 19, **caractérisée en ce que** l'un des éléments de fixation par complémentarité de forme comporte un réceptacle (66, 66') avec des flancs de fixation (70a, b) orientés l'un vers l'autre.

21. Machine-outil selon l'une quelconque des revendications 17 à 20, **caractérisée en ce qu'**un autre des éléments de fixation par complémentarité de forme comporte un saillant (76, 76') à insérer dans le réceptacle (66, 66') avec des flancs extérieurs (80a, b) orientés dans des sens opposés.

22. Machine-outil selon la revendication 20 ou 21, **caractérisée en ce que** transversalement à la direction d'enfichage (81), les flancs de fixation (70a, b) sont situés à une distance l'un de l'autre qui diminue au fur et à mesure de l'extension des flancs de fixation (70a, b) dans le sens d'enfichage (81).

23. Machine-outil selon la revendication 21 ou 22, **caractérisée en ce que** les flancs de fixation (70a, b) et les flancs extérieurs (80a, b) sont adaptés l'un à l'autre et sont en appui linéaire-ment l'un contre l'autre au moins selon une direction (81).

24. Machine-outil selon l'une quelconque des revendications 20 à 23, **caractérisée en ce que** les flancs de fixation (70a, b) sont réalisés de manière convexe.

25. Machine-outil selon l'une quelconque des revendications 21 à 24, **caractérisée en ce que** les flancs extérieurs (80a, b) sont réalisés de manière convexe.

26. Machine-outil selon l'une quelconque des revendications 17 à 25, **caractérisée en ce que** les éléments de fixation par complémentarité de forme (66, 76) s'appuient l'un contre l'autre sensiblement à plat lorsqu'ils sont en prise par conjugaison de forme.

27. Machine-outil selon la revendication 26, **caractérisée en ce que** les éléments de fixation par complémentarité de forme (66, 76) s'appuient l'un contre l'autre par des surfaces ajustées.

28. Machine-outil selon l'une quelconque des revendications 17 à 27, **caractérisée en ce que** les éléments de fixation par complémentarité de forme (66, 76') sont formés d'un seul tenant sur l'élément de positionnement (64).

29. Machine-outil selon l'une quelconque des revendications 17 à 28, **caractérisée en ce qu'**après son ajustement exact par rapport au support d'outils (20), l'élément de positionnement (64) peut être fixé dans la position ajustée.

30. Machine-outil selon l'une quelconque des revendications 17 à 29, **caractérisée en ce qu'**après son ajustement exact par rapport au support d'outils (20), l'élément de positionnement (64) est fixé contre ce dernier de manière immobile en translation.

31. Machine-outil selon la revendication 30, **caractérisée en ce que** l'élément de positionnement (64) est relié au support d'outils (20) de manière immobile en translation par l'intermédiaire d'une liaison par complémentarité de forme (94).

32. Machine-outil selon l'une quelconque des revendications 17 à 31, **caractérisée en ce que** l'élément de positionnement (64) et l'élément de fixation par complémentarité de forme (66, 76') qui lui est associé sont situés sur un côté, détourné du porte-outil (30), d'un plan défini par la surface de repos (24).

33. Machine-outil selon l'une quelconque des revendications 17 à 32, **caractérisée en ce que** le support d'outils (20) comporte une pluralité de stations d'outil (23), dans lesquelles peuvent être insérés des porte-outil (30), **en ce qu'**au moins deux stations d'outil (23) sont munies chacune d'un élément de positionnement (64), qui est ajusté de telle sorte qu'un porte-outil (30), inséré dans chacune de ces stations d'outil (23) et muni d'un deuxième élément de positionnement (74), est orienté de manière identique dans sa position de travail respective.
